# EUROPEAN PATENT APPLICATION

(11) **EP 2 875 727 A1**
(43) Date of publication of application: **27.05.2015**
(21) Application number: 13194471.2
(22) Date of filing: 26.11.2013
(51) Int. Cl.: A01N 25/04, A01N 25/30, A01N 43/40

(54) **Aqueous suspension concentrates containing picolinafen**

(71) Applicant: BASF SE, 67056 Ludwigshafen (DE)
(72) Inventor: Kolb, Klaus, 67105 Schifferstadt (DE); Troppmann, Ulrike, 67105 Schifferstadt (DE); Knieriem, Torsten, Research Triangle Park, 27709 (US); Marxer, Katja, 67133 Maxdorf (DE)

(57) **Abstract**

The present invention relates to an aqueous suspension concentrate (SC) comprising
A) picolinafen or an agriculturally acceptable salt thereof and
B) at least one anionic surfactant containing at least one sulfonate group or at least one sulfate group,

wherein the weight ratio between components A) and B) is in the range from 1:1 to 10:1.

The invention also relates to a method for preparation of the SC according to the invention, to its use for controlling unwanted vegetation and to the methods of use. The invention is further relates to the use of an anionic surfactant containing at least one sulfonate group or sulfate group as a crystal growth inhibitor in agrochemical aqueous suspension concentrates.

## Description

The present invention relates to aqueous suspension concentrates containing picolinafen. The invention also relates to the use of these concentrates for controlling undesired vegetation and to corresponding methods.

Pesticides with low water solubility are often formulated into suspension concentrates (SCs). SCs are aqueous formulations containing a pesticide as fine particles which are dispersed in the aqueous medium. SCs have the desirable characteristics of a liquid that may be poured or pumped and which can easily be diluted with water to the desired concentration required for application. Additionally, SCs do not require the use of water-immiscible organic solvents.

General problems associated with SCs are settling and caking resulting in instability of the formulation, difficulty in processing and unreliability of usage.

Picolinafen (common name for N-(4-fluorophenyl)-2-(3-trifluoromethylphenoxy)-6-pyridinecarboxamide) has the formula (I) 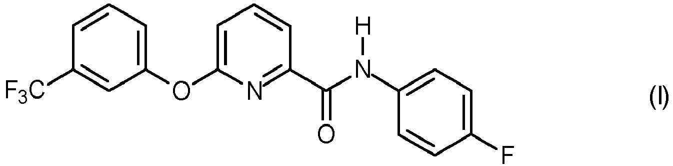 and is known from EP 0 447 004. It is also described in "The Pesticide Manual," 11th Edition, The British Crop Protection Council and The Royal 10 Society of Chemistry, 1997, (hereinbelow abbreviated as "Pesticide Manual").

Picolinafen can be prepared as described, for instance, in EP 0 899 262 and WO 2007/051759.

SC comprising low amounts of picolinafen as one of the active ingredients is known as Picona®.

Efforts to formulate picolinafen into highly concentrated SCs showed that upon storing picolinafen tends to form large crystals, in particular needles, resulting in instability of the formulation. This problem is most pronounced when storing aqueous SCs of picolinafen at temperatures above 35°C and especially above 40°C.

Further, high concentrations of picolinafen may lead to undesired thickening (gelling) or to a phase separation in the SC.

It has now been found that aqueous SCs comprising picolinafen and at least one anionic surfactant containing at least one sulfonate group or at least one sulfate group demonstrate good long term storage stability and/or good storage stability at elevated temperatures. Said SCs do not show large crystal formation.

Therefore, the problem underlying the present invention is to provide highly concentrated aqueous SCs comprising picolinafen.

This problem is solved by an aqueous SC comprising
A) picolinafen including agriculturally acceptable salts thereof (component A); and
B) at least one anionic surfactant containing at least one sulfonate group or at least one sulfate group (component B or surfactant B),
wherein the weight ratio between A) and B) is in the range from 1:1 to 10:1.

The present invention entails a series of advantages. Particularly, the SCs according to the invention, although containing large amounts of picolinafen, exhibit good physical and chemical stability over prolonged storage times. Thus, no large crystal formation, significant agglomeration, precipitation or gelation occurs even when stored for extended time periods, especially for extended time periods at elevated temperatures. Further, the SCs according to the invention have appropriate viscosity to facilitate addition to the target medium and to ensure maximum evacuation of the concentrate's container. Moreover, the SCs of the invention show very good herbicidal activity against a broad spectrum of weeds that have high economic impact. Upon dilution with water the SCs give stable aqueous dilutions and have very good herbicidal activity.

Further, the present invention provides ready to use herbicidal formulations obtainable by diluting SCs according to the present invention with water.

The use of both, the SCs and/or the ready to use herbicidal formulations as defined above for controlling undesired vegetation falls within this invention.

Further, the present invention provides a method for preparation of the SC according to the present invention, which method comprises suspending component A) in water in the presence of component B).

Further, the present invention provides a method for controlling undesirable vegetation, which method comprises allowing the SC according to the present invention to act on plants, their habitat and/or their seeds.

Further, the present invention provides the use of an anionic surfactant containing at least one sulfonate group or at least one sulfate group as a crystal growth inhibitor in agrochemical suspension concentrates.

Further embodiments of the present invention are evident from the claims, the description and the examples. It is to be understood that the features mentioned above and still to be illustrated below of the subject matter of the invention can be applied not only in the combination given in each particular case but also in other combinations, without leaving the scope of the invention.

As used herein, the term "agriculturally acceptable salts" means the salts of those cations and the acid addition salts of those acids whose cations and anions, respectively, have no adverse effect on the herbicidal activity of an active ingredient.

Preferred cations are the ions of the alkali metals, preferably of lithium, sodium and potassium, of the alkali earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diisopropylammonium, trimethylammonium, heptylammonium, dodecylammonium, tetradecylammonium, tetramethylammonium, tetraethylammonium, tetrabutylammonium, 2 hydroxyethyl-ammonium (olamine salt), 2-(2-hydroxyeth-1-oxy)eth-1-ylammonium (diglycolamine salt), di(2-hydroxyeth-1-yl)-ammonium (diolamine salt), tris(2-hydroxyethyl)ammonium (trolamine salt), tris(2-hydroxy-propyl)ammonium, benzyltrimethylammonium, benzyltriethylammonium, N,N,N-trimethylethanol-ammonium (choline salt), furthermore phosphonium ions, sulfonium ions, preferably tri(C₁-C₄-alkyl)sulfonium, such as trimethylsulfonium, and sulfoxonium ions, preferably tri(C₁-C₄-alkyl)sulfoxonium, and finally the salts of polybasic amines such as N,N-bis-(3-amino-propyl)methylamine and diethylenetriamine.

Anions of useful acid addition salts are primarily chloride, bromide, fluoride, iodide, hydrogensulfate, methylsulfate, sulfate, dihydrogenphosphate, hydrogen¬phosphate, nitrate, bicarbonate, carbonate, hexafluorosilicate, hexafluorophosphate, benzoate and also the anions of C₁-C₄-alkanoic acids, preferably formate, acetate, propionate and butyrate.

As used herein "concentrate" refers to a SC that contains at least 5 % by weight, preferably at least 10 % by weight, more preferably at least 15 % by weight, most preferably at least 20 % by weight and particularly preferably at least 25 % by weight, based on the total weight of the SC, of component A).

In one embodiment of the present invention, the weight ratio between components A) and B) in the SC is preferably in the range from 1:1 to 8:1, more preferably in the range of from 1:1 to 7:1 and most preferably in the range from 1:1 to 6:1. Particularly preferred are the weight ratios between A) and B) in the range of from 1:1 to 4:1.

The SCs of the present invention usually comprise from 20 to 550 g/l, preferably from 20 to 500 g/l, more preferably from 25 to 450 g/l, most preferably from 25 to 400 g/l, particularly preferably from 30 to 350 g/l of component A.

The particles of picolinafen contained in the SCs of the invention are solid particles which mainly contain pure picolinafen. The purity of picolinafen is preferably at least 90% by weight, more preferably at least 95% and most preferably is at least 97% by weight.

The particle size of the suspended particles is in the range which is typical for aqueous SCs.

As a rule, the D₅₀ value of the picolinafen particles of the SCs according to the invention is in the range from 0.25 to 20 µm, preferably in the range from 0.5 to 15 µm, more preferably in the range from 0.75 to 10 µm, most preferably in the range from 1 to 6 µm. The D₅₀-value is defined as the value that is above the diameters of 50% by weight of the particles and below the diameters of 50% by weight of the particles. Preferably, at least 80% by weight, in particular at least 90% by weight, of the particles have particle sizes in the stated ranges. A particle size that is not exceeded by the diameters of at least 90% by weight of the particles is herein also termed the D₉₀-value. In general, the D₉₀-value of the picolinafen particles of the SCs according to the invention will not exceed 25 µm, preferably not exceed 20 µm, more preferable not exceed 15 µm and most preferable not exceed 10 µm. Advantageously, at least 40% by weight, preferably at least 60% by weight and in particular at least 80% by weight of the particles have a particle diameter of below 8 µm. The particle size can be determined by conventional methods such as light-scattering.

The mean size of particles of the SCs according to the invention in usually the range from 0.5 to 15 µm, preferably in the range from 1 to 10 µm, more preferably in the range from 1 to 7 µm, most preferably in the range from 1 to 4 µm.

The SCs of the present invention can also comprise a small amount of picolinafen in dissolved form. The amount of dissolved picolinafen will, as a rule, not exceed 20% by weight, preferably 15% by weight, more preferably 10%, most preferably 5% by weight based on the total amount of picolinafen present in the SC.

The SCs of the present invention also comprise, as component B), at least one anionic surfactant which contains at least one sulfonate group or at least one sulfate group.

In the SCs of the present invention the surfactant B) is preferably present in form of alkali metal salts, such as sodium or potassium salts, earth alkali metal salts, such as calcium salts, or ammonium salts thereof; most preferably in form of alkali metal salts thereof, such as sodium salts.

The surfactant B) is preferably selected from the groups B1), B2), B3), B4), B5) and B6) as defined below, more preferably from the groups B1), B2), B3), B4), B5) or B6), most preferably from the groups B1 and B4), particularly preferably from the group B4).

The anionic surfactants of group B1) are selected from C₁-C₁₆-alkylarene sulfonates, such as mono-, di- and tri-C₁-C₁₆-alkylbenzene sulfonates and mono-,di- and tri-C₁-C₁₆-alkylnaphthalene sulfonates. Examples of anionic surfactants of group B1) are dibutylnaphtalene sulfonate, dodecyldiphenylether sulfonate, cumyl sulfonate, octylbenzene sulfonate, nonylbenzene sulfonate, dodecylbenzene sulfonate and tridecylbenzene sulfonate. Preferred surfactants B1) are mono- or di-C₄-C₈-alkylnaphthalene sulfonic acids, mono- or di-C₄-C₁₆-alkylbenzene sulfonic acids and alkali metal salts, earth alkali metal salts, and ammonium salts thereof. The anionic surfactants B1) are commercially available e.g. under the trade name Wettol^{®} EM1 (BASF), Wettol^{®} NT1 (BASF), Rhodacal^{®} 70 (Rhodia) and Lutensit^{®} A-LBS (BASF).

The anionic surfactants of group B2) are selected from sulfated polyethoxylates of mono, di- or tristyryl phenols, C₆-C₂₂ alkanols or C₄-C₁₆-alkylphenols. Examples of anionic surfactants of group B2) are sulfates of polyethoxylated 2,4,6-tristyryl phenols or polyethoxylated lauryl alcohol and alkali metal salts, earth alkali metal salts and ammonium salts thereof. The anionic surfactants B2) are commercially available e.g. under the trade name Soprophor^{®} 4D 384 (Rhodia). Preferred salts are sodium, potassium salts, calcium salts and ammonium salts.

The anionic surfactants of group B3) are selected from di-C₄-C₁₆-alkylesters of sulfosuccinic acid and alkali metal salts, earth alkali metal salts and ammonium salts thereof. Preferred surfactants B3) are the sodium, potassium, calcium or ammonium salts of di-C₆-C₁₂-alkylesters of sulfosuccinic acid, in particular the sodium salt of dioctylsulfosuccinate. The anionic surfactants B3) are commercially available e.g. under the trade name Aerosol^{®} OT-A (Cytec).

The anionic surfactants of group B4) are selected from polymeric anionic surfactants having SO₃⁻ groups bound to an aromatic ring, e.g. condensates of aromatic sulfonic acids with formaldehyde and optionally with urea. Aromatic sulfonic acids are selected from sulfonated mono- or bicyclic C₅-C₁₀-aromatic hydrocarbons, such as phenyl or naphthyl, which can be unsubstituted or substituted by at least one hydroxy and/or C₁-C₂₀-alkyl group. Examples of anionic surfactants of group B4) are sulfonated naphthalene-formaldehyde condensates, sulfonated (C₁-C₂₀-alkyl-naphthalene)-formaldehyde condensates, sulfonated α- naphthol-formaldehyde condensates, sulfonated (C₁-C₂₀-alkyl-α-naphthol)-formaldehyde condensates, sulfonated β-naphthol-formaldehyde condensates, sulfonated (C₁-C₂₀-alkyl-β-naphthol)-formaldehyde condensates, sulfonated benzene-formaldehyde condensates, sulfonated (C₁-C₂₀-alkyl-benzene)-formaldehyde condensates, sulfonated phenol-formaldehyde condensates, sulfonated (C₁-C₂₀-alkyl phenol)-formaldehyde condensates, sulfonated cresol-formaldehyde condensates, sulfonated (C₁-C₂₀-alkyl cresol)-formaldehyde condensates, etc. The surfactants B) are preferably used as alkali metal salts or the earth alkali metal salts thereof, such as sodium, potassium or calcium salts. Particularly preferred are alkali metal salts thereof, such as sodium salts. Preferred surfactants B4) are alkali metal salts or earth alkali metal salts of condensates of naphthalene sulfonic acid and formaldehyde (sulfonated naphthalene-formaldehyde condensates). The anionic surfactants B4) are commercially available e.g. under the trade names Tamol^{®} DN (BASF), Tamol^{®} PP (BASF), Wettol^{®} D1 (BASF), SUPRAGIL^{®} MNS-88 (Rhodia), SUPRAGIL^{®} WP (Rhodia), MORWET^{®} D-425 (Akzo Nobel), Morwet^{®} D809 (Akzo Nobel), REAX^{®} (Westvaco Corporation).

The anionic surfactants of group B5) are selected from the sodium, potassium, calcium and ammonium salts of C₆-C₂₂-alkyl sulfonates and C₆-C₂₂-alkyl sulfates, such as lauryl sulfonate, isotridecyl sulfonate, lauryl sulfate, isotridecyl sulfate, cetyl sulfate and stearyl sulfate.

The anionic surfactants of group B6) are selected from the sodium, potassium, calcium and ammonium salts of sulfates and sulfonates of C₆-C₂₂-fatty acids and C₆-C₂₂-fatty acid esters.

According to one embodiment of the invention the SC comprises as component B) at least one condensate of aromatic sulfonic acids with formaldehyde (sulfonated aromatic-formaldehyde condensate) of group B4).

According to a preferred embodiment of the invention the sulfonated aromatic-formaldehyde condensate
is selected from condensates of formaldehyde with sulfonated mono- or bicyclic C₅-C₁₀-aromatic hydrocarbons, wherein these condensates are unsubstituted or substituted by at least one hydroxy and/or C₁-C₂₀-alkyl, preferably from agriculturally acceptable salts thereof, more preferably from alkali metal salts or earth alkali metal salts, such as sodium, potassium or calcium salts thereof, most preferably from alkali metal salts thereof. Particularly preferred are sodium salts thereof;
preferably selected from sulfonated naphthalene-formaldehyde condensates, sulfonated α- or β-naphthol-formaldehyde condensates, sulfonated benzene-formaldehyde condensates, sulfonated phenol-formaldehyde condensates or sulfonated cresol formaldehyde condensates, wherein these condensates are unsubstituted or substituted by at least one C₁-C₂₀-alkyl, preferably from agriculturally acceptable salts thereof, more preferably from alkali metal salts or earth alkali metal salts thereof, such as sodium, potassium or calcium salts thereof, most preferably alkali metal salts thereof. Particularly preferred are sodium salts thereof;
more preferably selected from sulfonated naphthalene-formaldehyde condensates, sulfonated α- or β-naphthol-formaldehyde condensates, wherein these are unsubstituted or substituted by at least one C₁-C₂₀-alkyl, preferably from agriculturally acceptable salts thereof, more preferably from alkali metal salts or earth alkali metal salts thereof, such as sodium, potassium or calcium salts thereof, most preferably alkali metal salts thereof. Particularly preferred are sodium salts thereof;
most preferably selected from sulfonated naphthalene-formaldehyde condensates, wherein these condensates are unsubstituted or substituted by at least one C₁-C₂₀-alkyl, preferably from agriculturally acceptable salts thereof, more preferably from alkali metal salts or earth alkali metal salts thereof, such as sodium, potassium or calcium salts thereof, most preferably alkali metal salts thereof. Particularly preferred are sodium salts thereof.

Sulfonated aromatic-formaldehyde condensates useful for the present invention can be prepared, for example, by reacting a sulfonated aromatic compound with formaldehyde to form a condensation product. Alternatively, an unsulfonated compound can be first condensed with formaldehyde and the condensate then sulfonated. The processes of preparation of such condensates are disclosed, for instance, in DE 1 137 005, US 5,190,565 and US 3,954,677.

The SCs of the present invention usually comprise from 20 to 90 g/l, preferably 20 to 85 g/l, more preferably 25 to 80 g/l, most preferably 25 to 75 g/l, particularly preferably from 30 to 75 g/l of component B.

To widen the spectrum of action and to obtain synergistic effects, the SCs of the invention can be mixed with a large number of further herbicidal or growth-regulatory active substances (component C or herbicide C) and/or safeners (component D or safener D) or applied together with these.

As used herein, the term "safeners" means organic active compounds, some of which may also have herbicidal activity, which reduce or even prevent damage to the crop plants by herbicides.

Examples of herbicides C), which are suitable for SCs according to the present invention, are acetochlor, acifluorfen, aclonifen, alachlor, alloxydim, amidosulfuron, asulam, atrazine, azimsulfuron, beflubutamid, bensulfuron, bentazone, bifenox, bromacil, bromobutide, bromofenoxim, bromoxynil, butachlor, butroxydim, carfentrazone, chloramben, chloridazone, chlorthiamid, cinidon-ethyl, clethodim, chlorimuron, chlorotoluron, chlorsulfuron, cinosulfuron, clodinafop, clopyralid, cyanazine, cyclosulfamuron, cycloxydim,cyhalofop, 2,4-D, 2,4-DB, desmedipham, dicamba, dichlobenil, dichlorprop, dichlorprop-P, diclofop, diflufenican, diflufenzopyr, dimethachlor, dimethenamid, dimethenamid-P, dinoseb, dinoterb, diphenamid, diquat, DNOC, ethametsulfuron, ethoxysulfuron, etobenzanid, fenoxaprop, fenoxaprop-P, fentrazamide, flamprop, flazasulfuron, florasulam, fluazifop, fluazifop-P, fluazolate, flucarbazone, flufenacet, flumioxazin, flupyrsulfuron, flurenol, fluroxypyr, flurtamone, fosamine, glyphosate, halauxifen (CAS 943832-60-8), halosulfuron, haloxyfop, haloxyfop-P, imazamethabenz, imazamox, imazapic, imazapyr, imazaquin, imazethapyr, imazosulfuron, iodosulfuron, ioxynil, isoproturon, isoxaben, lenacil, linuron, MCPA, MCPB, mecoprop, mecoprop-P, mefenacet, mesosulfuron, metamitron, metazachlor, methabenzthiazuron, metolachlor, metolachlor-S, metribuzin, metsulfuron, naptalam, neburon, nicosulfuron, orbencarb, oxasulfuron, paraquat, pendimethalin, penoxsulam, phenmedipham, picloram, pinoxaden, pretilachlor, profoxydim, propachlor, propaquizafop, propanil, propoxycarbazone, prosulfocarb, prosulfuron, pyraflufen, pyridate, pyroxsulam, quinclorac, quinmerac, quizalofop, quizalofop-P, rimsulfuron, saflufenacil, sethoxydim, simazine, sulfometuron, sulfosulfuron, terbacil, tepraloxydim, thenylchlor, thifensulfuron, tiocarbazil, tralkoxydim, triasulfuron, tribenuron, trifloxysulfuron, triflusulfuron and tritosulfuron; including agriculturally acceptable salts and/or derivatives thereof;

Preferred herbicides C) are amidosulfuron, beflubutamid, bentazon, bifenox, carfentrazone, cinidon-ethyl, clodinafop, clopyralid, 2,4-D, 2,4 DB, dichlorprop-P, diflufenican, florasulam, flufenacet, flumioxazin, flupyrsulfuron, flurtamone, fluroxypyr, halauxifen, glyphosat, imazamethabenz, imazamox, imazapic, imazapyr, imazaquin, imazethapyr, imazosulfuron, iodosulfuron, ioxynil, isoproturon, MCPA, mecoprop-P, mesosulfuron, metsulfuron, nicosulfuron, pendimethalin, penoxsulam, pinoxaden, propoxycarbazone, prosulfocarb, pyraflufen, pyroxsulam, sulfosulfuron, thifensulfuron, triasulfuron, tribenuron and tritosulfuron; including agriculturally acceptable salts and/or derivatives thereof;

More preferred herbicides C) are 2,4-D, 2,4 DB, flufenacet, halauxifen, imazamethabenz, imazamox, imazapic, imazapyr, imazaquin, imazethapyr and MCPA; including agriculturally acceptable salts and/or derivatives thereof.

Most particularly herbicides C) are 2,4-D, 2,4 DB, flufenacet, halauxifen and MCPA; including agriculturally acceptable salts and/or derivatives thereof.

The term "agriculturally acceptable derivatives" as mentioned herein means that herbicidal compounds and/or safeners as described herein having a carboxyl group, amino group and/or hydroxyl group can be employed as such and/or as amides, such as mono- and di-C₁-C₆-alkylamides or arylamides, and/or as esters, for example as allyl esters, propargyl esters, C₁-C₁₀-alkyl esters, alkoxyalkyl esters, tefuryl ((tetrahydrofuran-2-yl)methyl) esters and/or as thioesters, for example as C₁-C₁₀-alkylthio esters. Preferred mono- and di-C₁-C₆-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl), meptyl (1-methylheptyl), heptyl, octyl or isooctyl (2-ethylhexyl) esters. Preferred C₁-C₄-alkoxy-C₁-C₄-alkyl esters are the straight-chain or branched C₁-C₄-alkoxy ethyl esters, for example the 2-methoxyethyl, 2-ethoxyethyl, 2-butoxyethyl (butotyl), 2-butoxypropyl or 3-butoxypropyl ester. An example of a straight-chain or branched C₁-C₁₀-alkylthio ester is the ethylthio ester.

In a preferred embodiment of the present invention, the SCs comprises optionally up to 600 g/l, preferably up to 500 g/l, more preferably up to 450 g/l, most preferably up to 400 g/l, particularly preferably up to 350 g/l of at least one further active ingredient C) as defined above.

In the SCs of the present invention, the weight ratio of component A) to component C) is usually in the range of from 1:10 to 10:1, preferably in the range of from 1:8 to 6:1, more preferable in the range of from 1:6 to 4:1. Particularly preferred are the weight ratios of A) to C) of about 1:6 and of about 2:1.

The total amount of the components A) and C) will, as a rule, not exceed 650 g/l, preferably 600 g/l, more preferably 550 g/l, most preferably 500 g/l and particularly preferable 450 g/l and is typically in the range from 20 to 650 g/l, preferably in the range from 20 to 600 g/l, more preferably in the range from 25 to 550 g/l, most preferably in the range of from 25 to 500 g/l, particularly preferably in the range of from 30 to 450 g/I.

In another embodiment of the present invention the SCs according to the present invention comprise at least one safener D).

Examples of preferred safeners D) are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

More preferred safeners D) are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Most preferred safeners D) are benoxacor, cloquintocet, cyprosulfamide, dichlormid, fenchlorazole, fenclorim, furilazole, isoxadifen, mefenpyr, naphtalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

The amount of safeners D) will, as a rule, not exceed 30% by weight, preferably 20% by weight, more preferably 15% by weight of the total weight of the SC according to the invention.

The herbicides C) and the safeners D) are known herbicides and safeners, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660.

Active compounds C) and safeners D) having a carboxyl group can be employed in the form of the acid, in the form of an agriculturally acceptable salt as mentioned above or else in the form of an agriculturally acceptable derivative thereof in the SCs according to the invention.

The SCs of the present invention may optionally comprise, as component E), at least one non-ionic surfactant.

Suitable non-ionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

In one embodiment of the present invention, the SCs may comprise at least two different non-ionic surfactants, which are preferably selected from polyethoxylates of C₁-C₂₂-alkanols and polymeric surfactants.

The total amount of component E) will, as a rule, not exceed 30% by weight, preferably 25% by weight, more preferably 20% by weight, most preferably 15% by weight, particularly preferably 10% by weight based on the total weight of the SC according to the invention.

The aforementioned components B) and E) are known to the skilled person. An overview can be found, for example, in McCutcheon's "Detergents and Emulsifiers Annual", MC Publ. Corp., Ridgewood N.J.; Sisley and Wood, "Encyclopedia of Surface active Agents", Chem. Publ. Co. Inc, N.Y. 1964; Schönfeldt, "Grenzflächenaktive Äthylenoxidaddukte" [Interface-active ethylene oxide adducts], Wiss. Verlagsgesellschaft, Stuttgart 1976; Winnacker-Küchler, "Chemische Technologie" [Chemical technology], volume 7, C. Hauser-Verlag, Munich, 4th edition 1986.

The SCs according to the invention may also comprise customary adjuvants, such as viscosity-modifying additives (thickeners), anti-foaming agents, anti-freezing agents, bactericides, preservatives, colorants, perfumes, anti-drift agents, adhesives, penetrants (penetration enhancers), antioxidants etc, which are usually employed in aqueous formulations of herbicides. The amount of adjuvants will generally not exceed 30% by weight, in particular 25% by weight of the total weight of the SC.

Suitable thickeners are compounds which affect the rheological properties of aqueous SCs, even when used in small amounts. These include in particular all substances which increase the viscosity of aqueous preparations, specifically those which are suitable for plant protection formulations.

Examples of suitable thickeners are natural silicates and modified natural silicates, such as chemically modified bentonites, hectorites, attapulgites, montmorillonites, smectites; silicate minerals, such as Bentone^{®} (Elementis), Attagel^{®} (Engelhard), Agsorb^{®} (Oil-Dri Corporation) or Hectorite^{®} (Akzo Nobel), and thickeners based on synthetic polymers, for example polyalkyl(meth)acrylates, polyamide thickeners, polyurethane thickeners, xanthan gum, for example the products sold under the name Rhodopol^{®} (Rhodia) and Kelzan^{®} S (Kelco Corp.). Preferred thickeners are silicate minerals and thickeners based on synthetic polymers.

Suitable anti-foaming agents are silicone emulsions (such as, for example, Silikon^{®} SRE, Wacker, Germany, or Rhodorsil^{®}, Rhodia, France), long-chain alcohols, fatty acids, salts of fatty acids, organofluorine compounds and their mixtures. Preferred are anti-foaming agents based on silicones.

Suitable anti-freezing agents are those from the group of the ureas, diols and polyols, such as ethylene glycol and propylene glycol.

Suitable bactericides are those based on dichlorophene and benzyl alcohol hemiformal (Proxel^{®} from ICI or Acticide^{®} RS from Thor Chemie and Kathon^{®} MK from Rohm & Haas) and also isothiazolinone derivatives such as alkylisothiazolinones and benzisothiazolinones (Acticide^{®} MBS from Thor Chemie).

Suitable preservatives, colorants and perfumes are known to the skilled worker, for example from the literature mentioned above in connection with surfactants, and from Watkins, "Handbook of Insecticide Dust Diluents and Carriers", 2nd Ed., Darland Books, Caldwell N.J.; H. v. Olphen, "Introduction to Clay Colloid Chemistry"; 2nd Ed., J. Wiley & Sons, N.Y.; and C. Marsden, "Solvents Guide"; 2nd Ed., Interscience, N.Y. 1963.

The aqueous SCs according to the invention can be prepared by methods known per se for the preparation of concentrates, for example by mixing components. Such methods are described, for instance by Mollet and Grubemann, Formulation technology, Wiley VCH, Weinheim, 2001; or Knowles, New develop-ments in crop protection product formulation, Agrow Reports DS243, T&F Informa, London, 2005.

Customary mixing devices which, if appropriate, can be heated may be used for preparing the mixtures. For the preliminary milling step, it is possible to use, for example, high-pressure homogenizers or mills which operate on the rotor-stator principle, such as Ultraturax homogenizers, for example from IKA, or toothed colloid mills, for example from Puck. Apparatus which can be used for the fine-grinding step can be, for example, batchwise-operating bead mills, for example from Drais, or continuously-operating bead mills, for example from Bachofen. Depending on the properties of the components employed, and on process-engineering and safety aspects and economic reasons, the preparation process can be adapted and, if appropriate, a pre-grinding step or else a fine-grinding step can be dispensed with.

The invention also relates to uses of the liquid SCs of the invention for protecting crop plants and to methods of controlling undesired vegetation, which comprise applying the SCs, in diluted or undiluted form, to plants, their environment and/or seeds.

The herbicidal SCs of the invention affect a very good control of vegetation in non-crop areas, especially at high application rates. In crops such as soybean, cotton, oilseed rape, flax, lentils, rice, sugar beet, sunflower, tobacco and cereals, such as, for example maize or wheat, they are active against broad-leaved weeds and grass weeds without inflicting substantial damage to the crop plants. This effect is particularly observed at low application rates.

Depending on the application method in question, the SCs of the invention can additionally be employed in a further number of crop plants to remove undesired plants. Crops which are suitable are, for example, the following: Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and prunus domestica, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera and Zea mays.

In addition, the SCs of the invention can also be used in crops which tolerate the effect of herbicides as the result of breeding, including genetic engineering methods.

Furthermore, the SCs of the invention can also be used in crops which tolerate attack by insects or fungi as the result of breeding, including genetic engineering methods.

In general, the SCs described herein are useful for combating undesired vegetation. For this purpose, the SCs may be applied as such or are preferably applied after dilution with water. Preferably, for various purposes of end user application, a so-called aqueous spray-liquor is prepared by diluting the SC of the present invention with water, e.g. tap water. The spray-liquors may also comprise further constituents in dissolved, emulsified or suspended form, for example fertilizers, active substances of other groups of herbicidal or growth-regulatory active substances, further active substances, for example active substances for controlling animal pests or phytopathogenic fungi or bacteria, furthermore mineral salts which are employed for alleviating nutritional and trace element deficiencies, and nonphytotoxic oils or oil concentrates. As a rule, these constituents are added to the spray mixture before, during or after dilution of the SCs according to the invention.

The SCs of the invention can be applied by the pre-emergence or the post-emergence method. If any of components of the SCs to the present invention is less well tolerated by certain crop plants, application techniques may be employed where the SCs are sprayed, with the aid of the spraying apparatus, in such a way that the leaves of the sensitive crop plants ideally do not come into contact with them, while the active substances reach the leaves of undesired plants which grow underneath, or the bare soil surface (post-directed, lay-by).

Depending on the aim of the control measures, the season, the target plants and the growth stage, the SCs of the invention are applied to such a degree that the application rates of picolinafen are from 0.001 to 3.0, preferably from 0.01 to 1.0 kg/ha, more preferably from 0.01 to 0.5 kg/ha active ingredient (a.i.).

It is of also possible to use the SCs of the present invention as a tank-mix partner with other formulations.

Moreover, it may be useful to apply the SCs of the invention, separately or in combination with other herbicides, jointly as a mixture with yet further plant protection agents, for example with agents for controlling pests or phytopathogenic fungi or bacteria.

The following examples are intended to further illustrate the present invention without limiting its scope in any way.

### I. Analytics:

Particle sizes were determined by dynamic light scattering with a Malvern Mastersizer 2000 system at 23°C.

Viscosities were measured in analogy to DIN EN ISO 255 with a Brookfield DV-E Viscometer, spindle 1 of the RV spindle set at 50 m⁻¹. In addition, dynamic viscosities were determined in analogy to OECD Test Guidline 114 ("Viscosity of Liquids").

### II. Surfactants:

- Surfactant 1 (S1):: of the sodium salt of a naphthalene sulfonic acid formaldehyde condensate - Morwet^{®} D 425 (Rhodia);
- Surfactant 2 (S2):: polycarboxylate - Sokalan^{®} CP 9 (BASF)
- Surfactant 3 (S3):: polyacrylate copolymer - Sokalan^{®} CP 12 S (BASF)
- Surfactant 4 (S4):: homopolymeric polyethylenimine - Lupasol^{®} WF (BASF)
- Surfactant 5 (S5):: ethoxylated tristyrylphenol - Soprophor BSU (Rhodia)
- Surfactant 6 (S6):: methyl methacrylate graft copolymer - Atlox 4913 (Croda Crop Care)
- Surfactant 7 (S7):: ether polycarboxilate - MVA 2500 (BASF)

### III. Preparation of the SCs:

### General procedure:

### Preparation of SCs:

The SCs of the present invention can be prepared in a known manner, for example by mixing respective constituents, optionally under heating, dispersing, emulsifying and/or grinding.

For example, the SCs according to the present invention are prepared by mixing picolinafen and optionally further active ingredients, such as flufenacet, with surfactants and dispersing agents and grinding these at temperatures from 0°C to 40°C using grinding media, preferably in ball mills or agitator bead mills (for example Dyno-Mill from Bachofen). The grinding media are preferably glass grinding media or other mineral or metallic grinding media having a size ranging from 0.1 to 30 mm, preferably from 0.6 to 2 mm.

The grinding is carried out in passages or in circulation mode until particles of the crystalline active ingredients reach an average particle size of less than 10 microns, preferably 1 to 10 microns. The grinding suspension is pumped through the mill with a suitable pump. The single charge is usually ranging from 0.5 to 20,000 liters. The concentration of the active ingredients is usually ranging from 10 to 60 percent by weight, preferably from 30 to 50 percent by weight.

### IV. SCs according to the invention*:

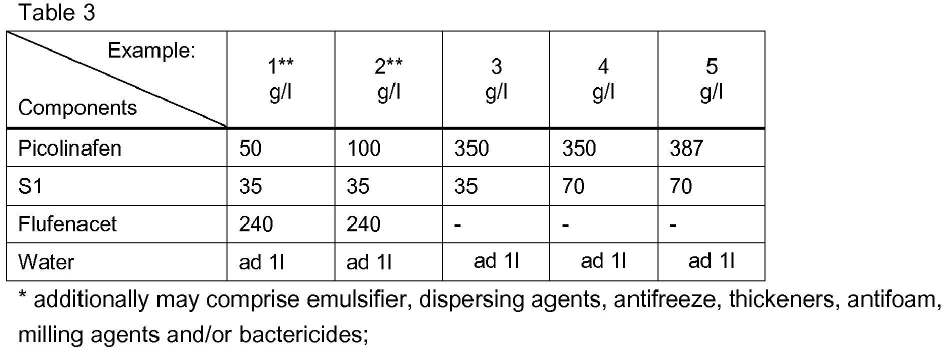

### IV. Comparative examples:

SCs comprising 350 g/l picolinafen without surfactant and with 35 or 70 g/l of Surfactants 1 to 7 were prepared as described above for the SCs according to the present invention.

Samples of SCs were then stored at room temperature and at 40°C for a period of up to 12 month.

The SCs according to the invention remain stable up to 12 month storage at room temperature and up to 3 month at 40°C. No crystallisation or phase separation was observed. The appearance of crystals was assessed by light microscopy (Axio Imager.A1 m microscope from Carl Zeiss).

Further, the SCs proved to be chemically and physically stable after 4 weeks temperature cycling at -10°C/+10°C and -5°C/+30°C.

The particle size and viscosity of the SCs was determined as defined above after preparation (0w) and after storing for 4 weeks at 40°C (4w).

**Table 1: Particle size of picolinafen, concentration of Picolinafen is 350 g/l**

| Components | Particle size, µm | | | |
|---|---|---|---|---|
| | 0w | 4w | 0w | 4w |
| | D₅₀ | D₅₀ | D₉₀ | D₉₀ |
| Picolinafen, no surfactant | 1,6 | 2,4 | 9,2 | 18,9 |
| Picolinafen + S1, 35 g/l | 1,6 | 1,7 | 9,3 | 9,5 |
| Picolinafen + S1, 70 g/l | 1,6 | 1,6 | 9,4 | 9,4 |
| Picolinafen + S2, 35 g/l | 1,6 | 2,5 | 9,4 | 19,8 |
| Picolinafen + S2, 70 g/l | 1,6 | 2,5 | 9,4 | 20,0 |
| Picolinafen + S3, 35 g/l | 1,6 | 2,2 | 9,0 | 17,5 |
| Picolinafen + S3, 70 g/l | 1,6 | 2,2 | 9,0 | 16,3 |
| Picolinafen + S4, 35 g/l | 1,4 | 2,4 | 8,4 | 23,4 |
| Picolinafen + S4, 70 g/l | 2,6 | 3,9 | 37,1 | 48,4 |
| Picolinafen + S5, 35 g/l | 1,6 | 2,4 | 9,1 | 20,4 |
| Picolinafen + S5, 70 g/l | 1,6 | 2,6 | 9,1 | 23,1 |
| Picolinafen + S6, 35 g/l | 1,6 | 2,3 | 9,2 | 18,2 |
| Picolinafen + S6, 70 g/l | - | - | - | - |
| Picolinafen + S7, 35 g/l | 1,6 | 2,3 | 9,1 | 18,0 |
| Picolinafen + S7, 70 g/l | 1,6 | 2,3 | 9,1 | 18,5 |

**Table 2: Viscosity of SCs**

| Components | Viscosity, mPa·s (at 50 ^{s-1}) | |
|---|---|---|
| | 0w | 4w |
| Picolinafen, no surfactant | 36 | 34 |
| Picolinafen + S1, 35 g/l | 43 | 46 |
| Picolinafen + S1, 70 g/l | 62 | 48 |
| Picolinafen + S2, 35 g/l | 57 | 193 |
| Picolinafen + S2, 70 g/l | 43 | 143 |
| Picolinafen + S3, 35 g/l | 71 | 72 |
| Picolinafen + S3, 70 g/l | 48 | 56 |
| Picolinafen + S4, 35 g/l | 43 | 41 |
| Picolinafen + S4, 70 g/l | 41 | 39 |
| Picolinafen + S5, 35 g/l | 47 | 43 |
| Picolinafen + S5, 70 g/l | 43 | 55 |
| Picolinafen + S6, 35 g/l | 39 | 36 |
| Picolinafen + S6, 70 g/l | - | - |
| Picolinafen + S7, 35 g/l | 90 | 115 |
| Picolinafen + S7, 70 g/l | 74 | 77 |

The results revealed that the particle size of picolinafen and viscosity of the concentrate remains constant in concentrates according to the present inventions. In comparative concentrates the particle size remarkably increased with time, while viscosity of the concentrates decreased.

In conclusion, the overall stability of the concentrates according to the invention at low to medium temperatures is good.

### V. Herbicidal activity of the SCs according to the invention

The concentrates according to the present invention showed very good herbicidal activity.

The evaluation for the damage was carried out using a scale from 0 to 100%, compared to the untreated control plants. Here, 0 means no damage and 100 means complete destruction of the plants.

## Claims

1. An aqueous suspension concentrate (SC) comprising
A) picolinafen or an agriculturally acceptable salt thereof and
B) at least one anionic surfactant containing at least one sulfonate group or at least one sulfate group,
wherein the weight ratio between components A) and B) is in the range from 1:1 to 10:1.

2. The SC according to claim 1, wherein the weight ratio between components A) and B) is in the range from 1:1 to 8:1.

3. The SC according to claim 1 or 2 comprising 20 to 550 g/I of component A).

4. The SC according to any one of claims 1 to 3 comprising 20 to 90 g/I of component B).

5. The SC according to any one of claims 1 to 4, wherein component B) is a condensate of aromatic sulfonic acids with formaldehyde (sulfonated aromatic-formaldehyde condensate).

6. The SC according to any one of claims 1 to 5, wherein component B) is a condensate of aromatic sulfonic acids with formaldehyde (sulfonated aromatic-formaldehyde condensate) and urea.

7. The SC according to claim 5 or 6, wherein the aromatic sulfonic acids are selected from sulfonated mono- or bicyclic C₅-C₁₀-aromatic hydrocarbons that are unsubstituted or substituted by at least one group selected from hydroxy and/or C₁-C₂₀-alkyl.

8. The SC according to claim 5 or 6, wherein the sulfonated aromatic-formaldehyde condensate is selected from sulfonated naphthalene formaldehyde condensates, sulfonated α- or β-naphthol-formaldehyde condensates, sulfonated benzene-formaldehyde condensates, sulfonated phenol formaldehyde condensates or sulfonated cresol formaldehyde condensates, wherein these condensates are unsubstituted or substituted by at least one C₁-C₂₀-alkyl group.

9. The SC according to any one of claims 1 to 8, additionally comprising at least one further herbicidal active ingredient C) and/or safener D).

10. The SC according to any one of claims 1 to 9, additionally comprising at least one further formulation additive.

11. A method for preparation of the SC as defined in any one of Claims 1 to 10 comprising suspending component A) in water in the presence of component B).

12. The use of the SC as defined in any one of claims 1 to 10 for controlling undesired vegetation.

13. A method for controlling undesired vegetation comprising allowing the SC as defined in any one of claims 1 to 10 to act on plants, their habitat and/or their seeds.

14. Use of an anionic surfactant containing at least one sulfonate group or sulfate group as a crystal growth inhibitor in agrochemical aqueous suspension concentrates.
